# FASCICULE DE BREVET EUROPEEN

(11) **EP 1 340 212 B1**
(45) Date de publication et mention de la délivrance du brevet: **28.09.2005**
(21) Numéro de dépôt: 01998955.7
(22) Date de dépôt: 27.11.2001
(51) Int. Cl.: G09F 3/02, G06K 19/06

(54) **PROCEDE D'AUTHENTIFICATION SECURISEE ET DE TRACABILITE D'UN PRODUIT NOTAMMENT D'UNE BOUTEILLE**
VERFAHREN ZUR SICHEREN AUTHENTIFIZIERUNG UND ÜBERWACHUNG EINES PRODUKTS, INSBESONDERE EINER FLASCHE
METHOD FOR SECURE AUTHENTICATION AND MONITORING OF A PRODUCT IN PARTICULAR A BOTTLE

(30) Priorité: 28.11.2000 FR 0015349
(43) Date de publication de la demande: 03.09.2003
(73) Titulaire: Bouthiaux, Catherine, 33000 Bordeaux (FR)
(72) Inventeur: Bouthiaux, Catherine, 33000 Bordeaux (FR)
(74) Mandataire: Fantin, Laurent
(86) Numéro de dépôt international: PCT/FR2001/003750
(87) Numéro de publication internationale: WO 2002/045053

(56) Documents cités:
- WO-A-99/42980
- FR-A- 2 667 576
- FR-A- 2 720 534

## Description

La présente invention concerne un procédé d'authentification sécurisée et de traçabilité d'un produit notamment d'une bouteille, plus particulièrement une bouteille de vin.

L'invention couvre aussi des moyens d'identification propres aux bouteilles.

Les produits de grande valeur comme les bouteilles de vin de très grande qualité posent des problèmes de contrôle et d'identification.

Il faut en effet assurer un suivi avec une authentification certaine car des manoeuvres frauduleuses sont de plus en plus souvent constatées.

Les contenants sont récupérés pour être de nouveau remplis avec des produits qui ne présentent aucunement les caractéristiques du produit initial.

On sait que les étiquettes en papier portant les indications du produit notamment dans le vin posent des problèmes de longévité. En fonction des conditions de conservation, il est possible de voir ces étiquettes se dégrader au point de ne pouvoir identifier le produit ce qui n'est pas souhaitable.

De plus, les étiquettes papier sont collées avec une composition adhésive qui est soluble dans l'eau.

Des progrès ont été réalisés avec des étiquettes réalisées dans un complexe en matière plastique inaltérable qui présente la propriété très particulière de ne pouvoir être décollé sans être dégradé.

De ce fait, la bouteille est toujours identifiée.

Afin de compléter cette identification et savoir si cette bouteille avec son étiquette rattachée sont des produits d'origine et non des copies, on sait placer sur ces étiquettes des signes d'authentification.

Ces signes peuvent de plus être réalisés par des organismes certifiés comme les organismes d'état qui procèdent déjà aux identifications des pièces officielles.

Les imprimeries d'état peuvent ainsi réaliser sur les étiquettes des micro écritures grâce à des techniques nécessitant un savoir-faire et des moyens non disponibles dans le commerce.

D'autres signes sont envisageables comme des marquages invisibles à l'oeil nu mais révélés par un éclairage générant une longueur d'ondes donnée.

On peut alors assurer la traçabilité d'une bouteille.

La présente invention propose un procédé de traçabilité de produit authentifiés afin de pouvoir à tout moment s'assurer que le produit que l'on contrôle est bien le produit fabriqué et authentifié à la source.

Dans le cas des bouteilles de vin, il subsiste un problème qui est celui de l'authentification du liquide contenu dans la bouteille.

On connaît des solutions comme celle divulguée dans la demande de brevet français FR 2 667 576 qui décrit un agencement d'inviolabilité d'une bouteille avec un circuit imprimé solidaire du bouchon qui devient inopérant lorsque le bouchon est retiré.

La demande internationale de brevet WO 99 42980 décrit une étiquette multi feuilles avec un code barres ménagé sur les différentes couches superposées.

La demande de brevet français FR 2 720 534 décrit un agencement avec deux éléments d'identification qui sont reliés entre eux par une relation déterminée.

La présente invention propose une solution particulière et propre aux bouteilles. A cet effet, le procédé d'authentification et de traçabilité d'un produit selon l'invention, notamment d'un lot de bouteilles de vin ou d'une bouteille, comprend les étapes suivantes :
- réaliser au moins une première étiquette en un film complexe en matière plastique inaltérable,
- apposer de façon inamovible cette première étiquette sur le produit,
- apposer sur cette première étiquette au moins un signe d'authentification sécurisé constitué d'une micro écriture, et
- introduire les caractéristiques de ce signe dans une base de données accessible en ligne et protégée par un code d'accès.

De façon préférentielle, le code d'accès aux caractéristiques contenues dans la base de données comprend une première et une seconde partie qui, réunies, constituent le code complet.

Dans le cas particulier d'une bouteille à capsule, on appose au moins un signe d'authentification sécurisée sur l'étiquette principale et sur et/ou sous la capsule de ladite bouteille.

Chaque signe d'authentification sécurisée complémentaire de la micro écriture est notamment un motif invisible à révélation par une lumière UV, un code à barres ou un liseré métallique à composition particulière d'alliage ne répondant qu'à une fréquence donnée.

L'invention couvre aussi un dispositif d'authentification d'une bouteille à capsule.

La portée du procédé sera mieux appréhendée à la lecture de la description qui va suivre en regard des dessins qui représentent :
- figure 1, une vue d'un schéma des échanges des données prévues, et
- figure 2, une vue d'un col de bouteille avec une capsule authentifiée.

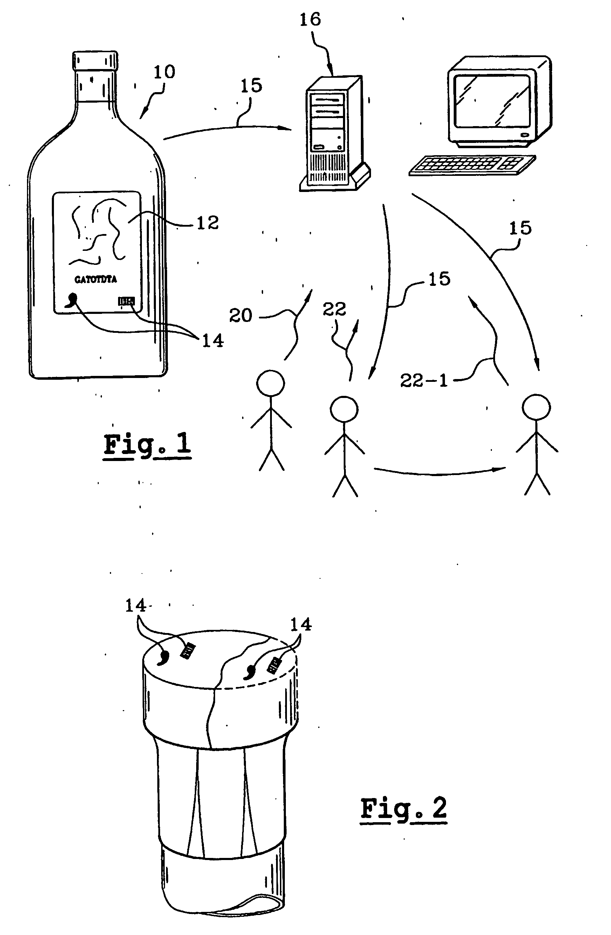

Afin de permettre une traçabilité des produits tels que des bouteilles de vin de grande valeur dont on sait qu'elles sont régulièrement falsifiées ou illégalement commercialisées, l'invention propose de réaliser les étapes suivantes.

La bouteille 10 reçoit une étiquette 12 réalisée à partir d'un film complexe en matière plastique, disponible dans le commerce.

Ce film comporte non seulement les indications d'origine et les signes distinctifs communs mais aussi des signes 14 d'authentification sécurisée. Ces signes sont nécessairement réalisés par des organismes d'état tels que des imprimeries d'état ou agrées par l'état.

Ces signes d'authentification sécurisée ne peuvent donc être reproduits par des faussaires et s'il devaient l'être, ce serait de façon non adaptée et très certainement reconnaissable. Il s'agit donc d'un premier obstacle à la copie.

On comprend aussi que ces signes d'authentification sont propres à chaque série de bouteilles tant en ce qui concerne la nature des signes que leur contenu.

Des signes d'authentification sécurisée peuvent être par exemple une combinaison d'un ou plusieurs des signes suivants : une micro écriture, un motif invisible à révélation par une lumière UV, un code à barres ou un liseré métallique à composition particulière d'alliage ne répondant qu'à une fréquence donnée.

Les informations 15 concernant chaque lot de bouteilles ou chaque bouteille individuellement, sont entrées dans une base informatique de données 16, accessible en ligne mais de façon protégée par un code.

Ceci est un deuxième obstacle pour avoir la connaissance des signes d'authentification.

De plus, ce code est divisé en une première partie 20 et une seconde partie 22, chaque partie étant portée à la connaissance d'une personne différente, par exemple le producteur et le premier acheteur.

Ainsi faut-il d'abord la présence de deux personnes pour disposer du code complet, ce qui permet de garantir la non diffusion des informations.

Dans le cas d'une vente d'un lot de bouteilles ou d'une bouteille, le premier acheteur transmet la partie du code attachée à ce lot ou à cette bouteille, ce qui permet une traçabilité.

Il est alors possible pour le gestionnaire de la base 16 de générer pour le deuxième acheteur un nouvelle seconde partie 22-1 du code en remplacement de celle détenue par le premier acheteur.

Par ces étapes, on peut assurer une traçabilité et savoir à tout moment si un lot de bouteilles ou une bouteille est bien celui ou celle provenant de tel ou tel producteur.

On note aussi que ce procédé ne demande pas l'intervention du gestionnaire de la base de données et que celle-ci peut être interrogée en tout points de la planète et à toute heure.

Néanmoins, cette authentification ne permet pas de savoir si le liquide, en l'occurrence le vin est bien celui initialement introduit par le producteur.

Aussi, la présente invention propose également des moyens d'authentification du contenu de la bouteille par détection de la non ouverture.

En effet, si la bouteille n'a pas été ouverte, c'est que le contenu est resté le même depuis la mise en bouteille.

Ces moyens consistent à reproduire sur la capsule des signes 14 d'authentification comme ceux qui ont été précédemment décrits pour les étiquettes, élaborés par les mêmes organismes d'état afin de limiter la reproduction.

Ces signes sont de préférence réalisés sur un film complexe de matière plastique comme précédemment pour des rendre l'impression plus facile.

Ce film, imprimé et découpé sous forme de pastille, est plaqué sur la capsule et/ou sous la capsule, en vis à vis du bouchon. Cette pastille ne peut pas être décollée une fois apposée et ne se dégrade pas au cours du temps y compris en cas de suintement au niveau du bouchon.

On sait que la capsule est très difficile à retirer sans la détruire et surtout sans laisser de traces de pliage.

Ceci est un obstacle insurmontable.

Ainsi dans le cas d'une vente et d'une vérification de l'authenticité, il est possible de lire les informations portées sur la capsule qui viennent en complément de celles portées par l'étiquette.

La capsule, une fois en place, fait partie intégrante de la bouteille sauf à la détruire. Ceci rend encore plus complexe la combinaison des signes et donc limite d'autant les reproductions frauduleuses.

Dans le cas d'une apposition sous la capsule, il faut retirer la capsule pour déterminer et contrôler les signes qui y sont portés. Ceci ne compromet néanmoins pas la qualité du liquide contenu dans la bouteille et ne nécessite pas son ouverture.

Par contre, il convient ensuite de procéder à la mise en place d'une nouvelle capsule avec de nouvelles indications, répertoriées à nouveau dans la base de données qui contient tout l'historique.

Ce mode de réalisation avec les signes apposés sous la capsule est particulièrement sécuritaire mais reste réservé à des utilisations en cas de contentieux ou à des ventes de produits à prix très élevé.

Il est aussi possible de réaliser des appositions sur et sous la capsule afin d'offrir toutes les garanties nécessaires.

L'invention couvre aussi le dispositif d'authentification d'une bouteille à capsule pour la mise en oeuvre de ce procédé.

Le procédé qui vient d'être décrit et le dispositif peuvent être appliqués à de nombreux autres domaines comme les parfums, les principes actifs concentrés en pharmacie ou les spiritueux.

## Revendications

1. Procédé d'authentification et de traçabilité d'un produit, notamment d'un lot de bouteilles de vin ou d'une bouteille, comprenant les étapes suivantes :
- réaliser au moins une première étiquette en un film complexe en matière plastique inaltérable,
- apposer de façon inamovible cette première étiquette sur le produit,
- apposer sur cette première étiquette au moins un signe d'authentification sécurisée sous la forme d'une micro écriture, et
- introduire les caractéristiques de ce signe dans une base de données accessible en ligne et protégée par un code d'accès.

2. Procédé d'authentification et de traçabilité d'un produit selon la revendication 1, **caractérisé en ce que** le code d'accès aux caractéristiques contenues dans la base de données comprend une première et une seconde partie qui, réunies, constituent le code complet.

3. Procédé d'authentification et de traçobilité d'un produit selon la revendication 1 ou 2, **caractérisé en ce que**, dans le cas d'une bouteille de vin, on appose au moins un signe d'authentification sécurisée sur l'étiquette principale et sur et/ou sous la capsule de ladite bouteille.

4. Procédé d'authentification et de traçabilité d'un produit selon l'une quelconque des revendications précédentes, **caractérisé en ce que** chaque signe d'authentification sécurisée complémentaire de la micro écriture est choisi parmi un motif invisible à révélation par une lumière UV, un code à barres ou un liseré métallique à composition particulière d'alliage ne répondant qu'à une fréquence donnée.

5. Dispositif d'authentification d'une bouteille à capsule pour la mise en oeuvre du procédé selon l'une quelconques de revendications 1 à 4, **caractérisé en ce qu'**il comprend au moins un signe d'authentification sécurisée apposé sur et/ou sous sa capsule.

6. Dispositif d'authentification d'une bouteille à capsule selon la revendication 5, **caractérisé en ce que** le signe est notamment une micro écriture, un motif invisible à révélation par une lumière UV, un code à barres ou un liseré métallique à composition particulière d'alliage ne répondant qu'à une fréquence donnée.

## Patentansprüche

1. Verfahren zur Authentifizierung und zur Rückverfolgbarkeit eines Produktes, insbesondere einer Charge von Weinflaschen oder einer Flasche, mit folgenden Schritten:
- Erstellen wenigstens eines ersten Etiketts aus einer komplexen Folie aus unveränderlichem Kunststoff,
- nicht ablösbares Anbringen des ersten Etiketts auf dem Produkt,
- Anbringen auf dem ersten Etikett wenigstens eines geschützten Authentifizierungszeichen in Form einer Mikroschrift und
- Eintragen der Charakteristik dieses Zeichens in eine Datenbank, welche online zugänglich und durch einen Zugangscode geschützt ist.

2. Verfahren zur Authentifizierung und zur Rückverfolgbarkeit eines Produktes nach Anspruch 1, **dadurch gekennzeichnet, dass** der Zugangscode zu den in der Datenbank enthaltenen Charakteristiken einen ersten und einen zweiten Teil aufweist, die zusammen den vollständigen Code bilden.

3. Verfahren zur Authentifizierung und Rückverfolgbarkeit eines Produktes nach Anspruch 1 oder 2, **dadurch gekennzeichnet, dass** im Falle einer Weinflasche wenigstens ein gesichertes Authentifizierungszeichen auf dem Hauptetikett und auf und/oder unter der Kapsel der Flasche angebracht wird.

4. Verfahren zur Authentifizierung und Rückverfolgbarkeit eines Produktes nach einem der vorangehenden Ansprüche, **dadurch gekennzeichnet, dass** jedes gesicherte Authentifizierungszeichen zusätzlich zu der Mikroschrift ausgewählt ist aus einem unsichtbaren Motiv zur Aufdeckung mittels UV-Licht, einem Strichcode oder einer metallischen Litze mit einer besonderen Legierungszusammensetzung, die auf eine gegebene Frequenz anspricht.

5. Vorrichtung zur Authentifizierung einer Flasche mit Kapsel für die Durchführung des Verfahrens nach einem der Ansprüche 1-4, **dadurch gekennzeichnet, dass** sie wenigstens ein auf und/oder unter der Kapsel angebrachtes gesichertes Authentifizierungszeichen enthält.

6. Vorrichtung zur Authentifizierung einer Flasche mit Kapsel nach Anspruch 5, **dadurch gekennzeichnet, dass** das Zeichen insbesondere eine Mikroschrift, ein unsichtbares Motiv zur Aufdeckung durch UV-Licht, ein Strichcode oder eine metallische Litze mit einer besonderen Legierungszusammensetzung ist, die auf eine gegebene Frequenz anspricht.

## Claims

1. A method for the authentication and traceability of a product, in particular a batch of wine bottles or of one bottle comprising the following steps:
- producing at least a first label made from a complex film made from stable plastics material,
- irremovably fixing this first label to the product,
- placing on this first label at least one secure authentication sign in the form of micro-writing, and
- introducing the characteristics of this sign into a database accessible on line and protected by an access code.

2. A method for the authentication and traceability of a product according to claim 1, **characterised in that** the code for access to the characteristics contained in the database comprises a first and second part which, combined, constitute the complete code.

3. A method for the authentication and traceability of a product according to claim 1 or 2, **characterised in that**, in the case of a bottle of wine, at least one secure authentication sign is placed on the main label and on and/or under the cap of said bottle.

4. Method for the authentication and traceability of a product according to any one of the preceding claims, **characterised in that** each complementary secure authentication sign of the micro-writing is selected from amongst an invisible pattern revealed by UV light, a bar code or a metallic border with a particular alloy composition responding only to a given frequency.

5. A device for authenticating a capped bottle for carrying out the method according to any one of claims 1 to 4, **characterised in that** it comprises at least one secure authentication sign placed on and/or under the cap.

6. A device for authenticating a capped bottle according to claim 5, **characterised in that** the sign is in particular micro-writing, an invisible pattern revealed by UV light, a bar code or a metallic border with a particular alloy composition responding only to a given frequency.
